# FASCICULE DE BREVET EUROPEEN

(11) **EP 0 546 892 B1**
(45) Date de publication et mention de la délivrance du brevet: **31.07.1996**
(21) Numéro de dépôt: 92403245.1
(22) Date de dépôt: 01.12.1992
(51) Int. Cl.: E21B 47/00, G01V 11/00, H01R 13/00

(54) **Procédé et dispositif pour l'interconnexion électrique d'appareils tels que de sondes de puits**
Verfahren und Einrichtung zur elektrischen Verbindung von Geräten wie Bohrlochsonden
Method and device for electrically interconnecting apparatuses such as wellbore probes

(30) Priorité: 11.12.1991 FR 9115483
(43) Date de publication de la demande: 16.06.1993
(73) Titulaire: INSTITUT FRANCAIS DU PETROLE, F-92502 Rueil-Malmaison (FR)
(72) Inventeur: Laurent, Jean, F-78630 Orvegal (FR)

(56) Documents cités:
- EP-A- 0 296 788
- FR-A- 2 544 376
- FR-A- 2 593 292
- FR-A- 2 613 496
- FR-A- 2 656 034
- GB-A- 2 072 792
- US-A- 4 877 089

## Description

La présente invention concerne un procédé et un dispositif pour interconnecter électriquement des appareils disposés dans un milieu conducteur et séparés les uns des autres, et notamment dans du liquide éventuellement sous pression, ainsi qu'un système de réception mettant en oeuvre le procédé.

Le procédé selon l'invention trouve son application par exemple dans le domaine de la prospection sismique dans des puits.

Les opérations de prospection sismique dans des puits ou forages implique la mise en place d'un ensemble de capteurs tels que des géophones et leur couplage acoustique avec les formations environnant le puits. Les capteurs sont disposés de préférence à une succession de profondeurs différentes et reliés par des câbles à une installation de surface Les signaux acoustiques ou sismiques reçus par les capteurs en réponse à l'émission dans le sol d'ondes sismiques, suite à des réflexions sur les discontinuités du sous-sol, sont transmise par les câbles à une station d'enregistrement en surface. Par les demandes de brevet français FR 2 593 292 et 2 642 849, on connaît une technique d'installation de capteurs à poste fixe dans un puits pourvu d'un tube de cuvelage maintenu en place par cimentation encore désigné par casing. Les capteurs sont fixés à l'extérieur du tube de cuvelage avant sa descente dans le puits, les câbles de liaison courant le long de sa paroi extérieure, et l'ensemble du dispositif de réception avec les câbles, est noyé dans le ciment injecté alors dans l'espace annulaire entre le puits et le tube. Un module électronique de préamplification et de filtrage peut être associé aux capteurs d'un même niveau. Les capteurs et leurs modules peuvent être inclus dans des boîtiers de protection rapportés le long de sections de casing ou bien inclus dans des raccords entre les sections successives du tube de cuvelage, comme il est décrit dans la demande de brevet FR 91/11 536.

Une solution connue pour relier électriquement entre eux plusieurs boîtiers comme ceux indiqués ci-dessus, consiste à utiliser des câbles mixtes électro-hydrauliques ou à faire passer des conducteurs électriques le long de câbles de transmission de fluides hydrauliques sous pression. A chaque extrémité de ce câble mixte, pour rétablir la sépération entre ses deux fonctions électrique et hydraulique, il faut utiliser des éléments de connexion électrique étanches. Ces éléments de connexion comportent généralement un manchon de raccordement pourvu de moyens de fixation mécanique pour un câble de liaison, un connecteur électrique mono ou multi-broches pour le raccordement de toutes les lignes du câble, comportant des traversées étanches pour les différentes lignes, et des moyens de connexion mécanique pourvus de joints d'étanchéité pour la fixation des manchons à chaque boîtier.

Un exemple de réalisation d'une interconnexion mixte dans un système de commande électro-hydraulique appliqué à des équipements miniers, est décrit par exemple dans le brevet GB-2 072 792.

Un autre exemple d'élément de connexion à la fois mécanique et électrique entre une sonde de puits et un câble multi-conducteurs, est décrit dans le brevet FR 2 615 044 du demandeur.

En raison de leur relative complexité, de tels éléments de connexion mixte peuvent difficilement être utilisés pour l'interconnexion d'un nombre important d'unités de réception comme celles indiquées ci-dessus. Les difficultés et le coût de mise en oeuvre augmentent vite avec le nombre d'unités du fait que l'on doit multiplier les interfaces étanches au niveau des connexions entre elles et les éléments de câble, pour maintenir clos et isolé électriquement l'espace intérieur de chaque unité de réception.

Le procédé selon l'invention permet l'interconnexion électrique de plusieurs unités de surveillance d'un gisement souterrain placées à distance les uns des autres dans des boîtiers ou corps clos, le long d'un puits ou forage, en évitant les inconvénients ci-dessus énoncés.

Il est caractérisé en ce qu'on interconnecte électriquement les différentes unités par des canalisations hydrauliques étanches, capables de résister à la pression régnant dans le puit et laissées vides de tout fluide hydraulique de manière à relier entre eux les espaces intérieurs des différents boîtiers ou corps, et on fait passer des conducteurs électriques de liaison dans ces canalisations laissées vides pour relier entre elles les différentes unités de surveillance.

Dans le cas où par exemple les différentes unités sont fixées à l'extérieur d'un tube de cuvelage destiné à être mis en place dans un puits et maintenu par injection de ciment dans l'espace annulaire entre lui et le puits, on relie lesdites unités de surveillance par des canalisations hydrauliques et étanches laissées vides de tout fluide hydraulique capables de supporter la pression d'injection du ciment, les conducteurs électriques de liaison passant à l'intérieur de ces canalisations vides.

Dans le cas où par exemple les différentes unités de surveillance sont associées à un tube de production d'effluents pétroliers descendu dans le puits et disposés dans l'espace annulaire autour dudit tube de production à des niveaux de profondeur différents, on interconnecte lesdites unités par des canalisations hydrauliques et étanches laissées vides de tout fluide hydraulique courant le long dudit espace annulaire, et on fait passer des conducteurs électriques dans ces canalisations vides.

Dans le cas où les différentes unités de surveillance sont des sondes de puits dans un ensemble multi-sondes comportant une sonde principale réunie à une installation de surface par un câble électro-porteur et au moins une sonde satellite, on concentre dans la sonde principale tous les conducteurs électriques associés à ces unités de surveillance dans les sondes satellites, en les faisant passer dans un circuit vide et étanche comportant au moins une canalisation de type hydraulique étanche laissée vide de tout fluide hydraulique reliant les différentes sondes de l'ensemble de sondes.

Le dispositif selon l'invention permet l'interconnexion électrique d'au moins deux unités de surveillance de puits disposées dans des boîtiers ou corps clos et à distance les uns des autres le long d'un puits ou forage. Il est caractérisé en ce qu'il comporte au moins une canalisation étanche laissée vide de tout fluide hydraulique, cette canalisation étant pourvue de moyens de connexion hydraulique permettant sa connexion à ses deux extrémités opposées aux boîtiers des unités de surveillance, de manière à faire communiquer entre eux les espaces intérieurs desdits boîtiers, et des fils conducteurs passant le long de la canalisation étanche laissée vide pour relier entre elles les unités de surveillance.

Dans le cas où ces boîtiers contiennent des moyens capteurs de signaux, les fils conducteurs passant dans chaque canalisation de type hydraulique laissée vide sont par exemple des lignes de transmission des signaux reçus par lesdits moyens capteurs.

Les unités de surveillance peuvent être des sondes contenant des capteurs et/ou des éléments électroniques, disposées à l'extérieur d'un tube de production mis en place dans le puits, ou faire partie d'.un ensemble multi-sondes descendu dans le puits.

Le dispositif peut comporter une station de commande et d'enregistrement en surface, une unité principale de surveillance connectée à la station de surface par un câble électro-porteur et contenant des moyens d'adaptation et de transmission de signaux sur ledit câble, et au moins une unité secondaire de surveillance reliée à la première unité par une canalisation hydrauque et étanche laissée vide où passent des conducteurs électriques issus d'au moins une unité de surveillance secondaire.

Le dispositif peut faire partie par exemple d'un système de surveillance acoustique ou sismique qui comporte plusieurs unités secondaires de surveillance, les conducteurs électriques issus de toutes ces unités secondaires de surveillance passant dans au moins un circuit unique constitué de plusieurs canalisations hydrauliques et étanches laissées vides de tout fluide hydraulique interconnectant en série les différentes unités.

D'autres caractéristiques et avantages de la méthode, du dispositif et du système selon l'invention apparaîtront mieux à la lecture de la description ci-après de modes de réalisation décrits à titre d'exemples non limitatifs, en se référant aux dessins annexés où:
- la Fig.1 montre un application de l'invention pour l'interconnexion d'unités de réception acoustique ou sismique installées à poste fixe dans l'espace annulaire entre un puits et un tube de cuvelage (casing);
- la Fig.2 montre un agencement similaire où l'une au moins de unités de réception est disposée dans un raccord spécial entre deux longueurs d'un tube de cuvelage et raccordée par plusieurs câbles hydrauliques distincts à plusieurs unités de réception secondaires;
- la Fig.2A montre une variante de l'agencement précédent avec une connexion en série des unités secondaires à une unité principale;
- la Fig.3 montre une autre application de l'invention pour l'interconnexion des éléments d'une unité de réception installée à poste fixe autour d'un tube descendu dans un puits pour sa mise en production;
- la Fig. 3A montre schématiquement une autre variante où plusieurs unités secondaires sont connectées en parallèle à une unité principale;
- la Fig.4 montre une autre application de l'invention pour l'interconnexion des sondes d'un ensemble multi-sondes adapté à être descendu dans un puits ou forage;
- la Fig.5 montre schèmatiquement un récepteur de signaux dans une unité et dont les fils conducteurs empruntent un câble hydraulique reliant cette unité à une autre;
- la Fig.6 montre une unité contenant un module d'acquisition de signaux auquel sont reliés les fils conducteurs provenant de capteurs dans d'autres sondes; et
- la Fig.7 montre schématiquement un élément-relais dans une unité intermédiaire d'un ensemble, permettant le regroupement de lignes de transmission provenant de récepteurs de signaux.

Le procédé d'interconnexion de plusieurs unités par une combinaison de connexions électriques dans des connexions hydrauliques, selon l'invention, convient de façon générale pour interconnecter des appareils placés dans un milieu conducteur à distance les uns des autres et permettre d'établir entre eux des liaisons électriques. En particulier, il peut être utilisé pour différentes applications dans des puits de production ou d'exploration pétrolière.

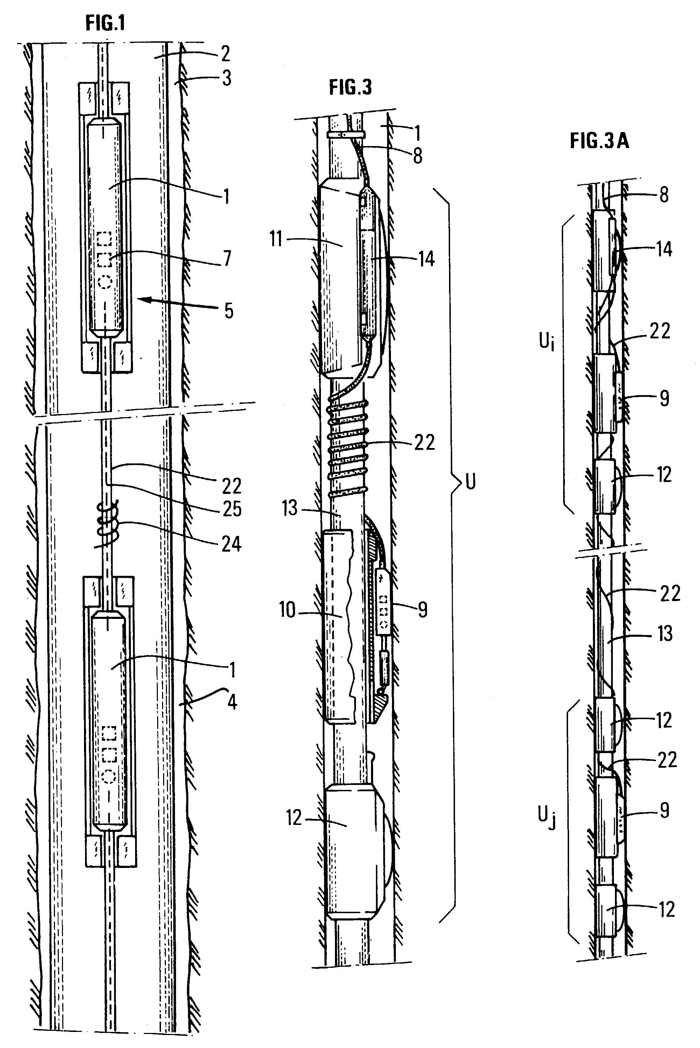

Le procédé d'interconnexion qui sera précisé plus loin, peut être utilisé par exemple dans le cadre d'un système de surveillance de puits comme décrit dans les brevets FR 2 593 292, 2 642 849 et la demande de brevet FR 91/11 536 précités. Un tel système comporte (Fig.1) une pluralité d'unités 1 de réception acoustique ou sismique disposés à distance les unes des autres à l'extérieur d'un tube de cuvelage ou casing 2. Ce tube est destiné à être mis en place dans un forage 3 et maintenu par une injection de ciment dans l'espace annulaire 4 entre lui et le puits. Les unités enfermées dans des boîtiers étanches, sont encastrées dans des logements de protection 5 rapportés sur la paroi extérieure de certaines sections du tube. Dans ces unités de réception sont disposés des capteurs tels que des géophones 7 et/ou des modules électroniques d'amplification et de filtrage. Les unités doivent être interconnectées entre elles et avec une installation de commande et d'enregistrement en surface (non représentée).

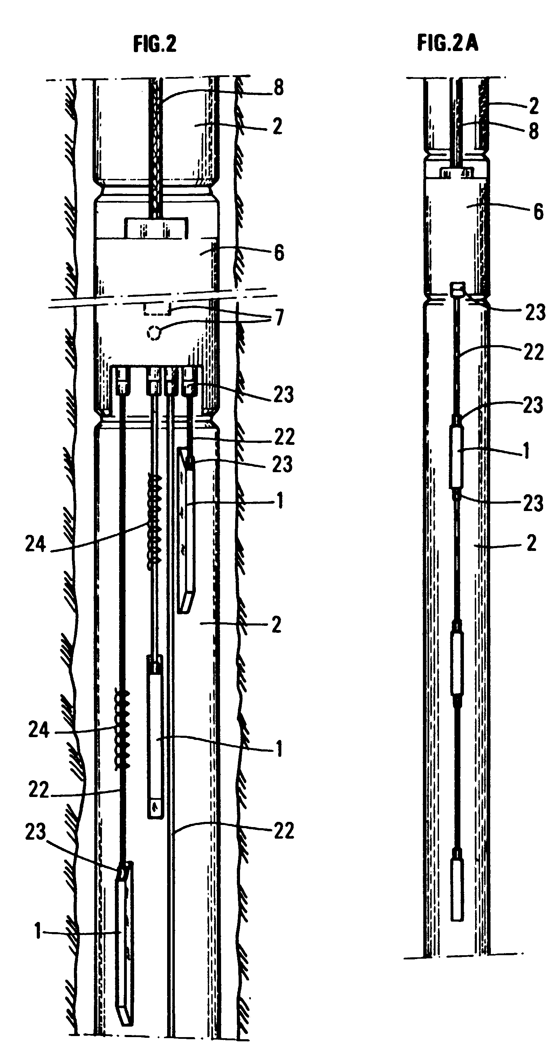

Comme cela est décrit dans la demande de brevet précitée, une ou plusieurs unités de réception peuvent aussi être incluses dans des raccords de casing spécialement adaptés qui comportent des logements pour des un ou plusieurs géophones et/ou pour des modules électroniques. Sur la Fig.2, on voit un agencement comportant une unité de réception principale 1 qui est incluse dans un raccord de casing 7 et reliée à une installation de surface par un câble électro-porteur 8 comme décrit dans la demande de brevet FR 91/11 536 précitée. Contre la paroi extérieure du casing et à des profondeurs différentes, sont disposés plusieurs boîtiers secondaires 1 analogues à ceux de la Fig.1. Par application du procédé selon l'invention, chacun d'eux peut être relié à l'unité principale 6 par une liaison particulière. Suivant la variante de la Fig.2A, les unités secondaires 1 peuvent aussi être reliées en série avec l'unité principale.

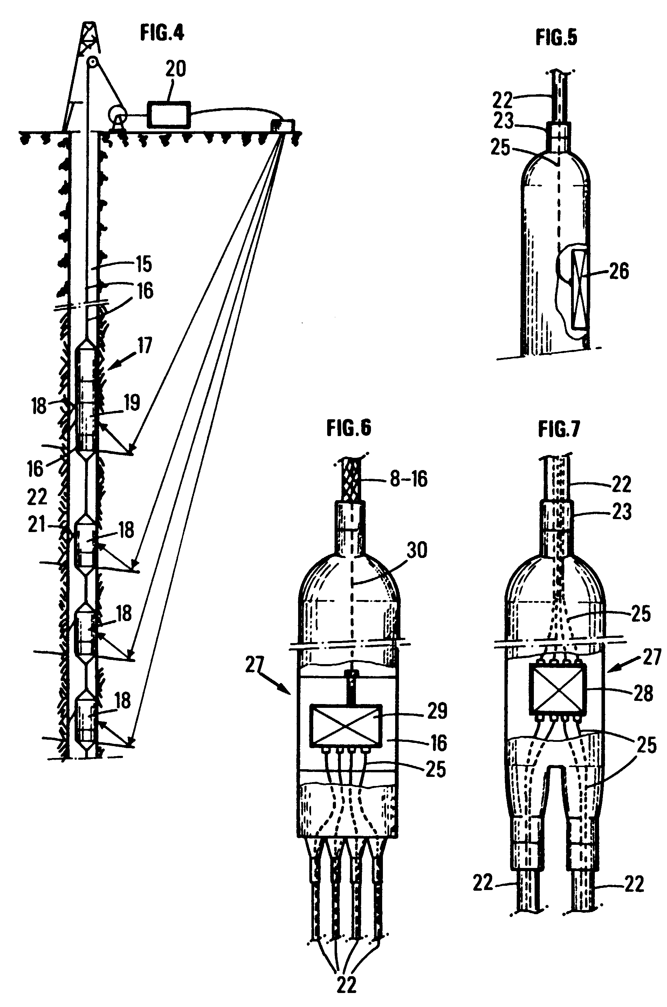

Le procédé selon l'invention peut aussi être utilisé pour la réalisation d'un appareil de réception sismique adapté à être installé à poste fixe à l'extérieur d'un tube de production pétrolière ou tubing comme décrit dans le brevet FR 2 656 034. Un tel appareil comporte par exemple (Fig.3) une unité de réception U comportant une sonde mobile 9 pouvant être écartée d'un support 10 et plaquée contre la paroi d'un puits ou d'un casing. Le support 10 est maintenu entre deux sabots 11, 12 fixés à un tube de production ou tubing 13. Au sabot supérieur 11, est fixé un boîtier électronique 14 pour l'amplification des signaux reçus par les capteurs de la sonde et éventuellement pour des capteurs dans d'autres unités disposées plus bas sur le tubing de production 13. Il s'agit dans une telle application, de relier entre eux différents capteurs et des modules électroniques par exemple. Suivant la variante de la Fig.3A, les sondes 9 de deux unités de réception Ui, Uj à des emplacements différents le long du tubing, sont reliés par des liaisons séparées avec un même boîtier électronique 14.

Le procédé selon l'invention peut convenir aussi par exemple pour réaliser l'interconnexion électrique de sondes de puits telles qu'on en utilise pour des opérations de prospection sismique. On descend dans un forage 15 à l'extrémité d'un câble électro-porteur multi-fonctions 16, un système d'acquisition comportant un outil ou sonde principal 17 sous lequel est suspendu une sonde ou plusieurs sondes satellites 18. Dans la sonde principale 17 et les sondes satellites 18, sont disposés des récepteurs d'ondes acoustiques ou sismiques 26 (Fig.5) et/ou des capteurs divers. Les récepteurs acoustiques sont par exemple des géophones adaptés à capter des signaux suivant un ou plusieurs axes. Un ensemble d'acquisition est disposé dans un compartiment 19 de la sonde principale par exemple pour acquérir les signaux provenant des capteurs, les numériser et les transmettre sous forme codée à une station centrale 20 en surface (Fig.3) par l'intermédiaire de lignes de transmission incluses dans le câble électro-porteur 16. Un système hydraulique (non représenté) est disposé dans un compartiment de la sonde principale. Il est alimenté électriquement par des lignes du câble 16 et il sert à actionner sur commande des vérins hydrauliques reliés à des bras d'ancrage 21. L'ouverture de ces bras permet de plaquer le corps de la sonde principale 17 et dans certains cas aussi, les corps des sondes satellites 18 contre la paroi du puits, de façon à coupler les différents récepteurs sismiques avec les formations traversées par le puits. Des dispositifs de ce type sont décrits par exemple dans les brevets FR 2 501 380, 2 548 727, 2 564 599, 2 613 496, 2 632 010, 2 636 741, 2 616 230.

Le procédé selon la présente invention qui est précisé ci-après, permet dans toutes les applications rappelées ci-dessus, d'établir de façon simple et peu onéreuse les connexions électriques nécessaires pour relier entre eux des éléments tels que des capteurs ou des modules électroniques par exemple, contenus dans différentes unités d'un ensemble quelconque de réception pour puits.

Le procédé selon l'invention comporte tout d'abord, l'établissement de liaisons entre les différentes unités 1, 6 (Fig.1,2), 9, 14 (Fig.3), 17, 18 (Fig.4) par des portions de câbles hydrauliques 22 capables de résister à la pression régnant dans le puits, chacune d'elles étant pourvue à chacune de ses extrémités, d'un connecteur hydraulique 23 avec des joints d'étanchéité. De tels câbles sont courants et relativement peu onéreux. Des attaches (non représentées) maintiennent ces câbles par rapport à la paroi du casing 2 (Fig.1,2) ou du tubing 13 (Fig.3). Des moyens de compensation 24 schématisés sur les Fig 1 à 3, permettent de compenser les effets de la dilatation du tubing ou du casing. Cette compensation peut être réalisée par enroulement hélicoïdal des câbles hydrauliques au tubing ou au casing.

Par cette interconnexion de câbles hydrauliques et de sondes, on forme ainsi un espace continu reliant entre elles les différentes unités, cet espace étant totalement isolé de la pression extérieure sur toute sa longueur.

Le procédé selon l'invention comporte aussi (Fig.1 à 3) l'utilisation de ce circuit hydraulique continu constitué par l'interconnexion des portions de câble, et qui est isolé du milieu extérieur, pour y faire passer des conducteurs électriques 25 associés à chaque élément de réception 26 (Fig.5) jusqu'à d'autres unités de l'ensemble de réception, de façon à les regrouper avec d'autres et/ou de les interconnecter. Par l'intermédiaire de ce circuit hydraulique, on peut faire remonter les conducteurs électriques des capteurs disposés dans les unités les plus basses 1 (Fig.2, 3A) vers l'unité de tête 6 ou jusqu'à l'installation de surface 20 (Fig 4) éventuellement si elle n'est pas trop éloignée. On peut aussi par l'intermédiaire du circuit hydraulique, relier les capteurs de la sonde 9 (Fig.3) au boîtier électronique 14 de la même unité de réception U ou d'une autre unité Ui (Fig.3A). Par ce circuit hydraulique encore, on peut relier les capteurs dans un ensemble de sondes satellites 18 (Fig.4) à un ensemble d'acquisition disposé par exemple dans la sonde principale 17.

Les connexions effectuées peuvent être directes, les fils de liaison 25 étant alors ininterrompus. Les connexions électriques peuvent encore être relayées une ou plusieurs fois (Fig.6, 7), par des éléments-relais. Suivant le mode de connexion de la Fig.7, une unité de réception principale 27 peut centraliser des conducteurs électriques 25 provenant de une ou plusieurs unités secondaires, qui sont reliées à elle par un ou plusieurs éléments de câble hydraulique 22. Ces conducteurs sont regroupés sur des connecteurs électriques passifs 28. Cette unité principale 27 peut elle-même être connectée à une unité de plus grande concentration par d'autres câbles hydrauliques.

Suivant le mode de connexion de la Fig.6, une unité de réception 27 et notamment celle qui se trouve en tête des différentes unités de réception, peut contenir par exemple un module électronique 29 pour l'adaptation des signaux reçus d'autres unités avant leur transmission. Les signaux peuvent être transmis directement sous leur forme analogique sur des lignes différentes 28 du câble électro-porteur (8, 16). Lorsque leur nombre ou la distance de transmission le justifie, on dispose dans la sonde ou unité de réception de tête, un module électronique 29 adapté à multiplexer et coder les signaux et l'on peut utiliser dans ce cas, par exemple, un câble de logging classique du type hepta-conducteur.

De préférence, on utilise le dispositif de connexion selon l'invention pour relier entre elles des unités de réception localisées dans une même région, les connexions entre les groupements d'unites éloignées les unes des autres ou éloignées d'une station de commande et d'enregistrement en surface étant effectuées de préférence par des lignes d'un câble multi-conducteurs.

Dans tous les cas, les circuits électriques sont isolés du milieu extérieur sur toute la longueur des circuits hydrauliques étanches.

Dans une application telles que celle de la Fig.3 où de l'énergie hydraulique est délivrée par un système hydraulique de la sonde principale 3 pour alimenter des vérins logés dans les sondes satellites 4, on utilise d'autres circuits hydrauliques séparés pour relier les sondes entre elles.

## Revendications

1. Procédé d'interconnexion électrique de plusieurs unités de surveillance d'un gisement souterrain disposées dans des boîtiers ou corps clos (1, 6, 9, 17, 18) et à distance les uns des autres le long d'un puits ou forage, caractérisé en ce qu'on interconnecte électriquement les différentes unités par des canalisations hydrauliques étanches (22), capables de résister à la pression régnant dans le puit et laissées vides de tout fluide hydraulique de manière à relier entre eux les espaces intérieurs des différents boîtiers ou corps, et on fait passer des conducteurs électriques de liaison dans ces canalisations laissées vides pour relier entre elles les différentes unités de surveillance.

2. Procédé d'interconnexion électrique selon la revendication 1, caractérisé en ce que lesdites unités étant fixées à l'extérieur d'un tube de cuvelage destiné à être mis en place dans un puits (3) et maintenu par injection de ciment dans l'espace annulaire entre lui et le puits, on relie lesdites unités de surveillance (1, 6) par des canalisations hydrauliques (22) et étanches laissées vides de tout fluide hydraulique capables de supporter la pression d'injection du ciment, les conducteurs électriques de liaison (25) passant à l'intérieur de ces canalisations vides.

3. Procédé d'interconnexion électrique selon la revendication 2, caractérisé en ce que lesdites unités de surveillance (9, 14) étant associées à un tube de production d'effluents pétroliers (13) descendu dans le puits et disposés dans l'espace annulaire autour dudit tube de production à des niveaux de profondeur différents, on interconnecte lesdites unités par des canalisations hydrauliques et étanches (22) laissées vides de tout fluide hydraulique courant le long dudit espace annulaire, et on fait passer des conducteurs électriques (25) dans ces canalisations vides.

4. Procédé d'interconnexion électrique selon la revendication 2, caractérisé en ce que lesdites unités de surveillance étant des sondes de puits dans un ensemble multi-sondes comportant une sonde principale (17) réunie à une installation de surface (20) par un câble électro-porteur (16) et au moins une sonde satellite (18), on concentre dans la sonde principale (17) tous les conducteurs électriques associés à ces unités de surveillance dans les sondes satellites (18), en les faisant passer dans un circuit vide et étanche comportant au moins une canalisation de type hydraulique étanche (22) laissée vide de tout fluide hydraulique reliant les différentes sondes de l'ensemble de sondes.

5. Dispositif d'interconnexion électrique d'au moins deux unités de surveillance de puits disposées dans des boîtiers ou corps clos et à distance les uns des autres le long d'un puits ou forage, caractérisé en ce qu'il comporte au moins une canalisation étanche (22) laissée vide de tout fluide hydraulique, cette canalisation étant pourvue de moyens de connexion hydraulique (23) permettant sa connexion à ses deux extrémités opposées aux boîtiers des unités de surveillance, de manière à faire communiquer entre eux les espaces intérieurs desdits boîtiers, et des fils conducteurs (25) passant le long de la canalisation étanche (22) laissée vide pour relier entre elles les unités de surveillance.

6. Dispositif selon la revendication 5, caractérisé en ce que, lesdits boîtiers contenant des moyens capteurs de signaux (26), les fils conducteurs (25) passant dans chaque canalisation de type hydraulique laissée vide sont des lignes de transmission des signaux reçus par lesdits moyens capteurs (26).

7. Dispositif selon la revendication 5 ou 6, caractérisé en ce que lesdites unités de surveillance sont des sondes (9, 14) contenant des capteurs et/ou des éléments électroniques, disposées à l'extérieur d'un tube de production (13) mis en place dans le puits.

8. Dispositif selon la revendication 5 ou 6, caractérisé en ce que lesdites unités de surveillance sont des sondes (17, 18) dans un ensemble multi-sondes descendu dans le puits.

9. Dispositif selon l'une des revendications 5 à 8, caractérisé en ce qu'il comporte une station de commande et d'enregistrement en surface, une unité principale (6, 7) de surveillance connectée à la station de surface par un câble électro-porteur (8) et contenant des moyens d'adaptation et de transmission de signaux sur ledit câble, et au moins une unité secondaire de surveillance (1, 18) reliée à la première unité par une canalisation hydrauque et étanche (22) laissée vide où passent des conducteurs électriques (25) issus d'au moins une unité de surveillance secondaire.

10. Système comportant le dispositif selon la revendication 9, caractérisé en ce qu'il comporte plusieurs unités secondaires de surveillance, les conducteurs électriques issus de toutes ces unités secondaires de surveillance passant dans au moins un circuit unique constitué de plusieurs canalisations hydrauliques et étanches (22) laissées vides de tout fluide hydraulique interconnectant en série les différentes unités.

11. Système selon la revendication 10, caractérisé en ce qu'il comporte plusieurs unités de réception secondaires de surveillance, les conducteurs électriques issus de chacune desdites unités secondaires, étant reliés à au moins une autre unité de surveillance par au moins un câble hydraulique particulier (22).

## Patentansprüche

1. Verfahren zur elektrischen Verbindung von mehreren Einheiten zur Überwachung einer unterirdischen Lagerstätte, die in Gehäusen oder geschlossenen Körpern (1, 6, 9, 17, 18) und in einem Abstand voneinander längs eines Bohrloches oder einer Bohrung angeordnet sind, dadurch gekennzeichnet, daß man die verschiedenen Einheiten durch hydraulische, dichte Leitungen (22) elektrisch miteinander verbindet, die geeignet sind, dem Druck, welcher in dem Bohrloch herrscht, standzuhalten, und die von sämtlichem hydraulischen Fluid unausgefüllt gelassen sind, derart, um zwischen ihnen die Innenräume der verschiedenen Gehäuse oder Körper zu verbinden, und man elektrische Leiter zur Verbindung in diesen unausgefüllt gelassenen Leitungen verlaufen läßt, um zwischen ihnen die verschiedenen Einheiten zur Überwachung zu verbinden.

2. Verfahren zur elektrischen Verbindung nach Anspruch 1, dadurch gekennzeichnet, daß die Einheiten an der Außenseite eines Futterrohres befestigt sind, das bestimmt ist, in einem Bohrloch (3) installiert und durch Injektion von Zement in den ringförmigen Zwischenraum zwischen ihm und dem Bohrloch gehalten zu werden, man die Einheiten (1, 6) zur überwachung über die hydraulischen und dichten, von sämtlichem hydraulischen Fluid unausgefüllt gelassenen Leitungen (22), die geeignet sind, den Druck zur Injektion des Zementes auszuhalten, verbindet, wobei die elektrischen Leiter (25) zur Verbindung im Inneren dieser unausgefüllten Leitungen verlaufen.

3. Verfahren zur elektrischen Verbindung nach Anspruch 2, dadurch gekennzeichnet, daß die Einheiten (9, 14) zur Überwachung mit einem Rohr (13) zur Produktion von Erdölabströmen, das in das Bohrloch abgesenkt ist, verbunden und in dem ringförmigen Zwischenraum um das Produktionsrohr auf verschiedenen Tiefenniveaus angeordnet sind, man die Einheiten über die hydraulischen und dichten, von sämtlichem hydraulischen Fluid unausgefüllt gelassenen Leitungen (22), die längs des ringförmigen Zwischenraumes verlaufen, miteinander verbindet und man die elektrischen Leiter (25) in diesen unausgefüllten Leitungen verlaufen läßt.

4. Verfahren zur elektrischen Verbindung nach Anspruch 2, dadurch gekennzeichnet, daß die Einheiten zur Überwachung Bohrlochsonden in einer Multi-Sondengesamtheit sind, die eine Haupt-sonde (17), welche mit einer Oberflächeninstallation (20) über ein Elektro-Tragkabel (16) verbunden ist, und wenigstens eine Satellitensonde (18) umfaßt, man in der Hauptsonde (17) die sämtlichen elektrischen Leiter, die mit diesen Einheiten zur Überwachung in den Satellitensonden (18) verbunden sind, konzentriert, indem sie in einem unausgefüllten und dichten Schaltkreis geführt werden, der wenigstens eine Leitung (22) von hydraulischem, dichten, von sämtlichem hydraulischen Fluid unausgefüllt gelassenen Typ umfaßt, welche die verschiedenen Sonden der Sondengesamtheit verbindet.

5. Vorrichtung zur elektrischen Verbindung von wenigstens zwei Einheiten zur Überwachung eines Bohrloches, die in Gehäusen oder geschlossenen Körpern und in einem Abstand voneinander längs eines Bohrloches oder einer Bohrung angeordnet sind, dadurch gekennzeichnet, daß sie wenigstens eine dichte, von sämtlichem hydraulischen Fluid unausgefüllt gelassene Leitung (22) umfaßt, wobei diese Leitung mit einer Einrichtung (23) zur hydraulischen Verbindung, die deren Verbindung mit ihren zwei den Gehäusen der Einheiten zur Überwachung gegenüberliegenden Enden gestattet, derart, um zwischen ihnen die Innenräume der Gehäuse kommunizieren zu lassen, und stromführende Leiter (25), die längs der dichten, unausgefüllt gelassenen Leitung (22) verlaufen, um zwischen ihnen die Einheiten zur Überwachung zu verbinden, versehen ist.

6. Vorrichtung nach Anspruch 5, dadurch gekennzeichnet, daß die Gehäuse Signalaufnehmereinrichtungen (26) umfassen, wobei die stromführenden Leiter (25), die in jeder Leitung von hydraulischem, unausgefüllt gelassenen Typ verlaufen, Leitungen zur Übertragung von Signalen sind, welche durch die Aufnehmereinrichtungen (26) empfangen sind.

7. Vorrichtung nach Anspruch 5 oder 6, dadurch gekennzeichnet, daß die Einheiten zur Überwachung Sonden (9, 14) sind, die Aufnehmer und/oder elektronische Elemente enthalten, welche an der Außenseite eines in dem Bohrloch installierten Produktionsrohres (13) angeordnet sind.

8. Vorrichtung nach Anspruch 5 oder 6, dadurch gekennzeichnet, daß die Einheiten zur Überwachung Sonden (17, 18) in einer Multi-Sondengesamtheit sind, die in das Bohrloch abgesenkt ist.

9. Vorrichtung nach einem der Ansprüche 5 bis 8, dadurch gekennzeichnet, daß sie eine Station zur Steuerung und Aufzeichnung an der Oberfläche, eine Haupteinheit (6, 7) zur Oberwachung, die mit der Oberflächenstation über ein Elektro-Trägerkabel (8) verbunden ist und Einrichtungen zur Adaption und zur Übertragung von Signalen über das Kabel umfaßt, und wenigstens eine zweite Einheit (1, 18) zur Überwachung, die mit der ersten Einheit über eine hydraulische und dichte, unausgefüllt gelassene Leitung (22) verbunden ist, in welcher elektrische Leiter (25) verlaufen, die von wenigstens einer zweiten Einheit zur Überwachung kommen, umfaßt.

10. System, das die Vorrichtung nach Anspruch 9 umfaßt, dadurch gekennzeichnet, daß es mehrere zweite Einheiten zur Überwachung umfaßt, wobei die elektrischen Leiter, die von sämtlichen dieser zweiten Einheiten zur Überwachung kommen, in wenigstens einem einzigen Schaltkreis verlaufen, der aus mehreren hydraulischen und dichten, von sämtlichem hydraulischen Fluid unausgefüllt gelassenen Leitungen (22), welche die verschiedenen Einheiten in Reihe miteinander verbinden, gebildet ist.

11. System nach Anspruch 10, dadurch gekennzeichnet, daß es mehrere zweite Empfangseinheiten zur Überwachung umfaßt, wobei die elektrischen Leiter, die von jeder der zweiten Einheiten kommen, mit wenigstens einer anderen Einheit zur Überwachung über wenigstens ein besonderes hydraulisches Kabel (22) verbunden sind.

## Claims

1. Method for electrically inter-connecting several monitoring units in an underground deposit arranged in housings or closed bodies (1, 6, 9, 17, 18) at a distance from one another along a well or bore, characterised in that the various units are electrically inter-connected using sealed hydraulic piping (22) capable of withstanding the pressure prevailing in the well and kept free of any hydraulic fluid in order to link the interior spaces of the various housings or bodies with one another and the electric conductor lines are run through these empty pipes so as to link the various monitoring units with one another.

2. Method of electrical inter-connection as claimed in claim 1, characterised in that the said units are mounted on the outside of a casing designed to be installed in a well (3) and retained in position by injecting cement into the annular space between it and the well and the said monitoring units (1, 6) are linked by means of sealed hydraulic piping (22) kept free of hydraulic fluid and capable of withstanding the injection pressure of the cement, the electric conductor lines (25) running through the inside of these empty pipes.

3. Method of electrical inter-connection as claimed in claim 2, characterised in that the said monitoring units (9, 14) are linked to a tube for the production of petroleum effluents (13) lowered into the well and arranged in the annular space around the said production tube at different depth levels and the said units are inter-connected by sealed hydraulic pipes (22) kept free of any hydraulic fluid running along the said annular space and electric conductors (25) are run through these empty pipes.

4. Method of electrical inter-connection as claimed in claim 2, characterised in that the said monitoring units are well sondes in a multi-sonde array having a main sonde (17) linked by an electric cable (16) to a surface installation (20) and at least one satellite sonde (18) and all the electric conductors linked to these monitoring units in the satellite sondes (18) are concentrated in the main sonde (17) by running them in an empty and sealed circuit consisting of at least one pipe of the sealed hydraulic type (22) kept free of any hydraulic fluid which links the different sondes in the sonde array.

5. Device for electrically inter-connecting at least two well monitoring units arranged in housings or closed bodies and at a distance from one another along a well or bore, characterised in that it has at least one sealed pipe (22) kept free of any hydraulic fluid, this pipe being provided with hydraulic connection means (23) so that it can be connected at its two opposite ends to the casings of the monitoring units so as to allow the interior spaces of the said casings to communicate with each other and conductor lines (25) are run along the sealed pipe (22), kept empty, in order to link the monitoring units to one another.

6. Device as claimed in claim 5 characterised in that where the said housings contain signal sensor means (26), the conductor lines (25) running through each hydraulic type pipe, kept empty, are lines for transmitting the signals picked up by the said sensor means (26).

7. Device as claimed in claim 5 or 6, characterised in that the said monitoring units are sondes (9, 14) containing sensors and/or electronic elements arranged on the outside of a production tube (13) installed in the well.

8. Device as claimed in claim 5 or 6, characterised in that the said monitoring units are sondes (17, 18) in a multi-sonde array lowered into the well.

9. Device as claimed in one of claims 5 to 8, characterised in that it has a control and recording station at the surface, a main monitoring unit (6, 7) connected to the surface station by an electric cable (8) and containing means for adapting and transmitting signals via the said cable and at least one secondary monitoring unit (1, 18) linked to the first unit by a sealed hydraulic pipe (22), kept empty, through which the electric lines (25) from at least one secondary monitoring unit pass.

10. System incorporating the device as claimed in claim 9, characterised in that it has several secondary monitoring units, the electric conductors from all of these secondary monitoring units being run through at least one single circuit made up of several sealed hydraulic pipes kept free of any hydraulic fluid, inter-connecting the various units in series.

11. System as claimed in claim 10, characterised in that it has several secondary reception units for monitoring, the electric lines from each of the said secondary units being linked to at least one other monitoring unit by at least one specific hydraulic cable (22).
